Europäisches Patentamt

European Patent Office

Office européen des brevets

(19)

(11) **EP 1 370 955 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(21) Anmeldenummer: 02719677.3

(22) Anmeldetag: **14.03.2002**

(51) Int Cl.$^7$: **G06F 13/40**, G06F 13/42

(86) Internationale Anmeldenummer:
**PCT/DE2002/000912**

(87) Internationale Veröffentlichungsnummer:
**WO 2002/075561 (26.09.2002 Gazette 2002/39)**

(54) **VERFAHREN UND VORRICHTUNG ZUR SYNCHRONISATION DER ZYKLUSZEIT VON MEHREREN TTCAN-BUSSEN SOWIE ENTSPRECHENDES BUSSYSTEM**

METHOD AND DEVICE FOR SYNCHRONIZING THE CYCLE TIME OF A NUMBER OF TTCAN BUSES, AND A CORRESPONDING BUS SYSTEM

PROCEDE ET DISPOSITIF DE SYNCHRONISATION DU TEMPS DE CYCLE DE PLUSIEURS BUS TTCAN, ET SYSTEME DE BUS CORRESPONDANT

(84) Benannte Vertragsstaaten:
**AT DE FR GB SE**

(30) Priorität: **15.03.2001 DE 10112910**
**15.03.2001 DE 10112913**
**15.03.2001 DE 10112912**

(43) Veröffentlichungstag der Anmeldung:
**17.12.2003 Patentblatt 2003/51**

(73) Patentinhaber: **ROBERT BOSCH GMBH**
**70442 Stuttgart (DE)**

(72) Erfinder:
• **FUEHRER, Thomas**
**70839 Gerlingen (DE)**
• **MUELLER, Bernd**
**71229 Leonberg (DE)**
• **HARTWICH, Florian**
**72762 Reutlingen (DE)**
• **HUGEL, Robert**
**76199 Karlsruhe (DE)**

(56) Entgegenhaltungen:
WO-A- 00/07335          DE-A- 10 000 302
DE-A- 10 000 303          DE-A- 10 000 304
DE-A- 10 000 305          US-A- 5 838 995
US-A- 5 991 844          US-A- 6 092 210

• BANERJEE S ET AL: "A TIME DRIVEN CONTROLLER AREA NETWORK FOR RELIABLE AUTOMATION" INDIAN JOURNAL OF POWER AND RIVER VALLEY DEVELOPMENT, BOOKS AND JOURNALS PRIVATE, LTD, IN, Bd. 47, Nr. 1/2, Januar 1997 (1997-01), Seiten 6-8, XP001028233 ISSN: 0019-5537
• FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, XX, XX, 2000, Seiten 1-7, XP002905415

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Verfahren und Vorrichtung zur Synchronisation der Zykluszeit in wenigstens zwei TTCAN-Bussen sowie ein entsprechendes Bussystem.

Die Vernetzung von Steuergeräten, Sensorik und Aktuatorik mit Hilfe eines Kommunikationssystems bzw. eines Bussystems hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über wenigstens einen Bus bzw. wenigstens ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert ist der CAN (controller area network). Dieses ist ein ereignisgesteuertes Protokoll, d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine Priorität zugewiesen ist. Das CAN-Protokoll ist sehr flexibel; ein Hinzufügen weiterer Knoten und Nachrichten ist damit problemlos möglich, so lange es noch freie Prioritäten (message identifier) gibt. Die Sammlung aller im Netzwerk zu sendenden Nachrichten mit Prioritäten und deren Senderknoten sowie möglicherweise Empfangsknoten werden in einer Liste, der sogenannten Kommunikationsmatrix abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel; ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Es wird also ein Fahrplan erstellt, der den Anforderungen der Nachrichten bezüglich Wiederholrate, Redundanz, Deadlines usw. genügen muss. Man spricht vom sogenannten Busschedule. Die Positionierung der Nachrichten innerhalb der Sendeperioden muss auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latent-Jitter beim Senden der Nachricht am Bus) zerstört. Es werden so hohe Anforderungen an die Planungstools gestellt. Ein solches Bussystem ist beispielsweise der TTP/C.

Der in den Patentanmeldungen DE 100 00 302 A1, DE 100 00 303 A1, DE 100 00 304 A1 und DE 100 00 305 A1 sowie dem ISO Standard 11898-4 (zur Zeit noch als Draft) gezeigte Lösungsansatz des zeitgesteuerten CAN, des sogenannten TTCAN (time triggered controller area network) genügt den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (basic cycle) in sogenannte exklusive Zeitfenster für periodische Nachrichten bestimmter Kommunikationsteilnehmer und in sogenannte arbitrierende Zeitfenster für spontane Nachrichten mehrerer Kommunikationsteilnehmer. TTCAN basiert im Wesentlichen auf einer zeitgesteuerten, periodischen Kommunikation, die durch einen hauptzeitgebenden Teilnehmer oder Knoten, den sogenannten Zeitmaster, mit Hilfe einer Zeitreferenznachricht, oder kürzer Referenznachricht getaktet wird. Die Periode bis zur nächsten Referenznachricht wird als Basiszyklus (basic cycle) bezeichnet und unterteilt sich in eine vorgebbare Anzahl von Zeitfenstern. Dabei wird zwischen den lokalen Zeiten bzw. lokalen Zeitgebern der einzelnen Teilnehmer bzw. Knoten und der Zeit des Zeitmasters als globaler Zeit von dessen Zeitgeber unterschieden. Weitere Grundlagen und Definitionen bezogen auf den TTCAN sind aus dem ISO-Draft 11898-4 oder dem genannten Stand der Technik zu entnehmen, werden somit als bekannt vorausgesetzt und nicht noch einmal explizit aufgeführt.

Für die Vernetzung von Steuergeräten in der Automatisierung, im Kraftfahrzeug oder an anderen Stellen gibt es somit eine Reihe von Echtzeitbussystemen wie z.B. die erwähnten CAN, TTP/C oder auch Byteflight sowie das eben ausgeführte TTCAN. Bei CAN, TTCAN oder Byteflight handelt es sich um Einkanalbussysteme, was bedeutet, dass Redundanz durch Vervielfachung des entsprechenden Systems erreicht werden kann. TTP/C ist ein intrinsisch zweikanaliges System, das bedeutet, dass die Redundanz immer eingebaut ist. Viele Bussysteme stellen als Service eine auf den Bus synchronisierte Zeitbasis zur Verfügung. Bei den Bussystemen, die von vornerein als Zwei- oder Mehrkanallösungen konzipiert werden, wird in der Regel die Synchronisierung per Design erzwungen; typischerweise dadurch, dass ein Knoten bzw. Teilnehmer auf beiden Bussen gleichzeitig senden muss. Dies hat Vorteile (z. B. Synchronisierung ist immer gewährleistet), aber auch eine Reihe von Nachteilen, wie z. B. dass nicht jeder Bus für sich zu betreiben ist, die Zeitmuster auf beiden Bussen nur sehr begrenzt verschieden sein können und dass die Modularität der beiden oder mehreren Bussysteme durch die per Design vorhandene Kopplung aufgeweicht wird.

Das Dokument WO 0 007 335 offenbart ein Verfahren Zum Patentransfer zwischen Zweier CANbusse, wobei die CAN-Busse, über wenigstens einen Busteilnehmer miteinander verbunden sind.

Wie ausgeführt zeigt sich somit, dass der Stand der Technik nicht in jeder Hinsicht optimale Ergebnisse zu liefern vermag. Diese Situation soll im Weiteren verbessert werden.

Bei Bussen bzw. Bussystemen, die als einkanalig konzipiert sind, wird nun die Synchronisierung explizit durchgeführt, falls sie benötigt wird. Im Weiteren wird von einem TTCAN-Netzwerk als Bussystem bzw. von mehreren TTCAN-Bussen bzw. Bussystemen und ihrer Verkopplung ausgegangen, wobei dies nur insofern als einschränkend bezüglich des späteren Gegenstands der Erfindung zu verstehen ist, als Eigenschaften des TTCAN Voraussetzung bzw. Notwendigkeit zur Darstellung des erfindungsgemäßen Gegenstandes sind.

Vorteile der Erfindung

Die Erfindung betrifft Verfahren und Vorrichtung sowie Bussystem zur Synchronisierung wenigstens zweier TTCAN-Busse mit wenigstens einem Busteilnehmer, wobei in den TTCAN-Bussen Zykluszeiten der Basiszyklen vorliegen, wobei in jedem TTCAN-Bus eine globale Zeit ermittelt wird und aus den globalen Zeiten die Abweichungen der globalen Zeiten der TTCAN-Busse ermittelt werden, welche über wenigstens einen Teilnehmer miteinander verbunden sind und die Abweichungen der einzelnen globalen Zeiten wenigstens einem Busteilnehmer übermittelt werden, wobei abhängig von den Abweichungen der globalen Zeiten eine Anpassung der Zykluszeiten der über wenigstens einen Teilnehmer verbundenen TTCAN-Busse aneinander vorgenommen wird, so dass diese bezüglich der Zykluszeiten synchronisiert sind.

Vorteilhafter Weise wird eine Anpassung der Zykluszeiten der über wenigstens einen Teilnehmer verbundenen TTCAN-Busse durch Anpassung der Phase der globalen Zeit vorgenommen.

Zweckmäßiger Weise erfolgt eine Anpassung der Zykluszeiten der über wenigstens einen Teilnehmer verbundenen TTCAN-Busse durch Anpassung der Frequenz der globalen Zeit.

In einer Vorteilhaften Ausgestaltung erfolgt die Anpassung der Phase der Zykluszeit abhängig von dem Wert wenigstens eines vorgegebenen Bits.

Weiterhin von Vorteil ist, dass das wenigstens eine vorgegebene Bit dem Next_is_Gap-Bit des TTCAN entspricht.

Zur Anpassung der Frequenz der globalen Zeit wird zweckmäßig jeweils eine kleinste Zeiteinheit (NTUZ) in den wenigstens zwei zu synchronisierenden TTCAN-Bussen ermittelt und diese kleinsten Zeiteinheiten mit einander ins Verhältnis gesetzt und das dabei entstehende reale Verhältnis mit einem vorgegebenen Verhältnis verglichen, wobei wenigstens eine kleinste Zeiteinheit so angepasst wird, dass das vorgegebene Verhältnis erzielt wird.

Weiterhin von Vorteil ist, dass das vorgegebene Verhältnis ganzzahlig insbesondere einem Vielfachen oder Teiler der Zahl Zwei entspricht.

Weitere Vorteile und vorteilhafte Ausgestaltungen ergeben sich aus der Beschreibung sowie den Merkmalen der Ansprüche.

Zeichnung

Die Erfindung wird im Weiteren anhand der in der Zeichnung dargestellten Figuren näher erläutert.

Dabei zeigt

Figur 1 die Verkopplung zweier TTCAN-Bussysteme mittels eines Teilnehmers, der als Gateway-Teilnehmer fungiert.

Figur 2 zeigt die Verkopplung dreier TTCAN-Bussysteme durch gekoppelte Paare.

Figur 3 zeigt die Verkopplung von vier TTCAN-Bussystemen durch verschiedene Teilnehmer zur Darstellung skalierbarer Toleranz.

Figur 4 zeigt ein Flussdiagramm zum Frequenzangleich zwischen zwei TTCAN-Bussen bzw. TTCAN-Bussystemen.

Figur 5 zeigt ein Flussdiagramm zur Darstellung des Phasenangleichs zweier TTCAN-Busse bzw. TTCAN-Bussysteme.

Beschreibung der Ausführungsbeispiele

Die Erfindung beschreibt allgemeine Möglichkeiten, wie ein fehlertolerantes Bussystem bzw. Netzwerk aus der Kombination von mehreren TTCAN-Bussen erzeugt werden kann. Besonders vorteilhaft ist dies zusammen mit den Mechanismen bezüglich der Synchronisation der globalen Zeit von mehreren TTCAN-Bussen und/oder der Synchronisation der Zykluszeit von mehreren TTCAN-Bussen, womit eine Synchronisation all dieser Busse im Gesamtbussystem oder Netzwerk aufeinander erreicht werden kann.

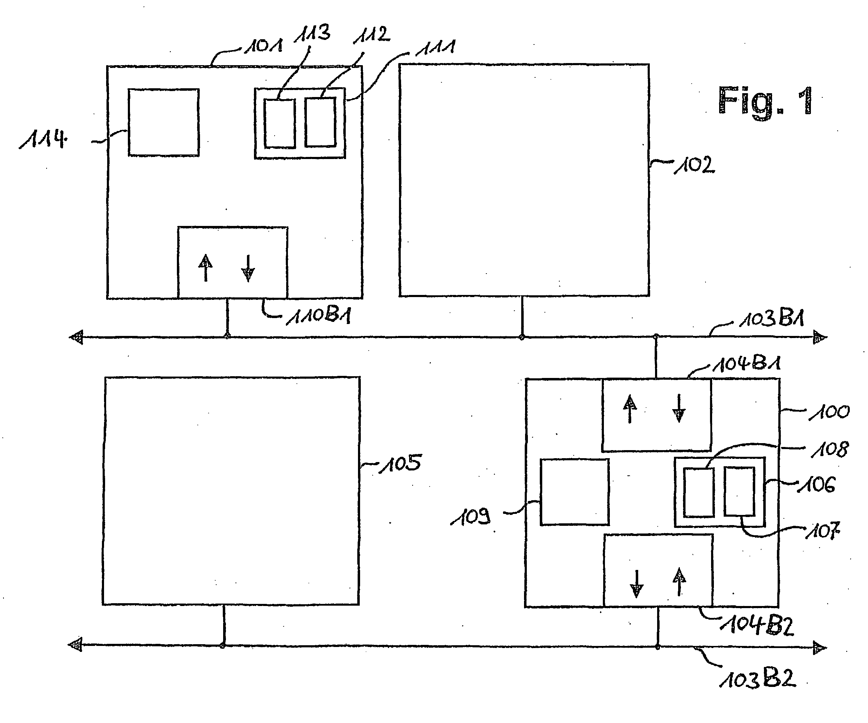

Figur 1 zeigt ein Bussystem bzw. Netzwerk bestehend aus mehreren, hier zwei, TTCAN-Bussen bzw. TTCAN-Bussystemen. Mit 103B1 ist darin ein erster Bus und mit 103B2 ein zweiter Bus dargestellt. Am ersten Bus 103B1 sind zwei Teilnehmer 101 und 102 angekoppelt. Am zweiten Bus 103B2 ist ein Teilnehmer 105 angekoppelt. Der Teilnehmer 100 ist an beide Busse 103B1 und 103B2 angekoppelt und fungiert als Verbindungsteilnehmer oder auch Gateway-Rechner bzw. Gateway-Teilnehmer oder Gateway-Controller, welcher auf beide Busse Zugriff hat. Ein gekoppeltes Paar von TTCAN-Bussen (hier 103B1 und 103B2) wird somit als eine Kombination von zwei TTCAN-Bussen so definiert, dass es mindestens einen Gateway-Teilnehmer gibt, der auf beide Busse Zugriff hat. Die Verbindung der einzelnen Teilnehmer zum jeweiligen Bus erfolgt über ein entsprechendes Schnittstellenelement, beispielsweise bei Teilnehmer 101 über das Schnittstellenelement 110B1. Ebenso ist der Teilnehmer 100 als Gateway-Teilnehmer über ein Schnittstellenelement 104B1 mit dem Bus 103B1 sowie über ein Schnittstellenelement 104B2 mit dem Bus 103B2 verbunden. Alternativ könnte auch im Gegensatz zu zwei Schnittstellenelementen 104B1 und 104B2 ein Schnittstellenelement mit zwei Anschlüssen zur Anbindung an den Bus 103B1 und an den Bus 103B2 vorgesehen sein.

Weiterhin dargestellt im Teilnehmer 100 bzw. 101 ist ein Taktgeber 111 bzw. 106 mit einer internen Taktquelle oder auch Zeitquelle 107 bzw. 112, insbesondere ein Quarz oder ein Oszillator, insbesondere ein VCO (voltage controlled oscillator). Weiterhin enthalten innerhalb des jeweiligen Zeitgebers 106 bzw. 111 ist ein Zeiterfassungsbaustein, insbesondere ein Zähler oder Counter 108 bzw. 113.

Steuerungsaufgaben im jeweiligen Teilnehmer, insbesondere zur Ein-/Ausgabe von Daten auf das Bussystem, zur Übernahme der Zeitinformation aus dem Zeitgeber sowie zur Synchronisation der Busse bzw. Busteilnehmer und weitere, insbesondere erfindungsgemäße Verfahren und Verfahrensschritte usw. können durch die Bausteine 109 bzw. 114 als Verarbeitungsbausteine, insbesondere einen Mikrocomputer bzw. Mikroprozessor oder auch Controller wahrgenommen werden. Teile dieser Funktionalität oder die gesamte Funktionalität kann aber auch direkt im jeweiligen Schnittstellenbaustein vorhanden sein.

Dabei kann nun ein Teilnehmer als Zeitreferenzgeber im Sinne von TTCAN vorgegeben werden, insbesondere pro Bussystem. Dieser Teilnehmer, der Zeitreferenzgeber als Zeitmaster, gibt somit den Basiszyklus wie im Stand der Technik beschrieben vor. Ebenso ist es möglich, dass der Gateway-Teilnehmer als Zeitreferenzgeber, also als Zeitmaster oder Timemaster für beide Bussysteme fungiert. Der Zeitgeber des entsprechenden Referenzteilnehmers, also des Zeitmasters des jeweiligen TTCAN-Systems, durch welchen die lokale Zeit dieses Zeitmasters ermittelt wird, gilt somit als Referenzzeitgeber bzw. gibt die Referenzzeit für das entsprechende Bussystem vor, also entsprechend 103B1 und/oder 103B2. D. h. der lokale Zeitgeber, z. B. 106 und/oder 111 des vorgegebenen Referenzteilnehmers als Zeitmaster gilt somit als globaler Zeitgeber des entsprechenden Busses bzw. Bussystems 103B1 und/ oder 103B2 und gibt die globale Zeit des entsprechenden Busses vor.

In Figur 1 ist somit ein gekoppeltes Paar von TTCAN-Bussen mit einem Gateway-Teilnehmer oder Gateway-Knoten dargestellt. Zur präziseren Darstellung dieser erfindungsgemäßen Kopplung wird die nachfolgende erfindungsgemäße Beschreibung verwendet:

Wenigstens zwei TTCAN-Busse B1, B2 sind gekoppelt, wenn es eine Folge Pi = (BXi, BYi) mit i = 1 bis n und n Element N gibt, die folgende Eigenschaften aufweist:

- BXi, BYi sind TTCAN-Busse für alle i.

- Für ein i bilden BXi und BYi ein gekoppeltes Paar von TTCAN-Bussen

- BX(i + 1) ist BYi (für i = 1 bis n-1)

- BX1 ist Bus B1 und BYn ist Bus B2.

D. h. zwei TTCAN-Busse B1 und B2 sind gekoppelt, wenn sie durch irgendeinen auch noch so komplizierten Pfad von gekoppelten Paaren verbunden sind. Ein System von mindestens zwei TTCAN-Bussen heißt hier ein fehlertolerantes TTCAN-Bussystem, wenn je zwei der Busse gekoppelt (im vorgenannten Sinne) sind. Somit sind alle Systemarchitekturen erfassbar, die ein fehlertolerantes TTCAN-Bussystem oder Netzwerk verwenden.

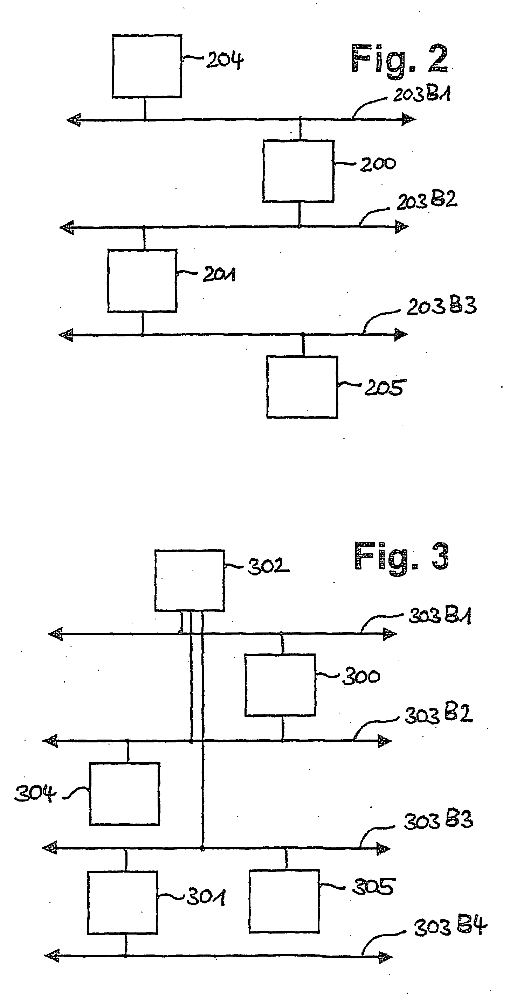

Weitere Beispiele sind in den Figuren 2 und 3 dargestellt. So zeigt Figur 2 drei TTCAN-Busse 203B1, 203B2 und 203B3 sowie Busteilnehmer 200, 201, 204 und 205. Dabei sind.die Busse 203B1 und 203B2 durch den Teilnehmer 200 miteinander verbunden und ebenso die Busse 203B2 und 203B3 durch den Teilnehmer 201. Somit sind im erfindungsgemäßen Sinne durch die Kopplung der Bussysteme 203B1 und 203B2 sowie 203B2 und 203B3 als gekoppelte Paare durch die Teilnehmer 200 und 201 auch die Bussysteme 203B1 und 203B3 entsprechend nach vorgenannter Definition fehlertolerant verbunden, insbesondere bezüglich der Synchronisation. Im Gegensatz zu konventionell redundanten Systemen, also zweier Busse im Gesamtbussystem, bei denen jeder Knoten bzw. Teilnehmer mit jedem anderen Bus redundant verbunden ist, also jeder Teilnehmer eine Verbindung zu jedem Bus aufweist, erlauben die hier vorgeschlagenen Systemarchitekturen durch Verwendung gekoppelter Paare eine skalierbare Fehlertoleranz sowie eine Mischung von fehlertoleranten und nicht fehlertoleranten Systemen.

Dies ist am Beispiel von Figur 3 noch einmal erläutert. Darin sind vier Busse 303B1, 303B2, 303B3 und 303B4 dargestellt. Daneben sind die Busteilnehmer 301, 302, 300, 304 und 305 dargestellt. Die Busse 303B1 und 303B2 sind durch den Teilnehmer 300 miteinander gekoppelt, und die Busse 303B3 und 303B4 durch den Teilnehmer 301. Gleichzeitig sind die drei Busse 303B1, 303B2 und 303B3 durch den Teilnehmer 302 miteinander verbunden, so dass einerseits eine Mischung von fehlertoleranten und nicht fehlertoleranten Systemen ermöglicht wird und andererseits die gewünschte Fehlertoleranz im System skalierbar, d. h. in verschiedenen Redundanzgraden (einfach-, zweifach-, mehrfach-redundant) dargestellt werden kann. Es ist somit möglich, höhere Redundanzgrade in ein System einzuführen, ohne dabei Systeme zu koppeln, die entkoppelt bleiben sollen. Damit ist eine Reduktion von Common-Mode-Fehlern, also Gleichtaktfehlern des Bussystems bzw. der Bussyteme ebenfalls möglich.

In Verbindung mit den Synchronisationsmechanismen im TTCAN ist es somit möglich, ein einheitliches synchronisiertes Kommunikationssystem zu schaffen, das alle denkbaren Fehlertoleranzgrade in einfachster Weise ermöglicht. Im Nachfolgenden wird die Synchronisierung bezüglich der globalen Zeit sowie der Zykluszeiten oder cycle time einzelner Teilnehmer bzw. Bussysteme näher beschrieben.

Zunächst wird ein allgemeines Verfahren beschrieben, wie zwei oder mehrere TTCAN-Busse, insbesondere Level 2 (Siehe ISO Draft), ihre globalen Zeiten aufeinander synchronisieren können. Dieses Verfahren kann sowohl von einer dedizierten Hardware, von der auf den entsprechenden Hosts ablaufenden Applikationen oder von einer speziellen Softwareschicht durchgeführt werden.

Im Folgenden wird das Verfahren zur Synchronisation einschließlich möglicher Varianten im Ablauf beschrieben. Ein Paar von Bussen wird hier direkt synchronisierbar genannt, wenn es mindestens einen Gateway-Rechner gibt, der auf beide Busse Zugriff hat, wie vorhergehend beschrieben. Allgemeine Voraussetzung ist weiterhin, dass es zwischen zwei zu synchronisierenden Bussen eine Kette von Gateways gibt, die die beiden Busse über direkt synchronisierbare Paare, also die oben genannten gekoppelten Paare verbindet. Die Synchronisationsschicht (Hardware oder Software), die die Synchronisation durchführt, wird im Folgenden Synchronisationslayer SL genannt. Dabei muss das SL nicht notwendigerweise auf jedem Knoten vorhanden sein, wie auch der nachfolgenden Beschreibung zu entnehmen ist.

In einer Ausführungsform ist der Gateway-Teilnehmer oder Gateway-Rechner der Zeitmaster in wenigstens einem der beiden zu synchronisierenden Busse zur Angleichung der Zeit in dem Bus, in dem er Timemaster ist. Optional als weitere Ausführungsform kann eine Nachricht vom Gateway-Teilnehmer an den Timemaster übermittelt werden, um die entsprechende Zeitanpassung zur Synchronisierung vorzunehmen. Dann ist es nicht notwendig, dass der Gateway-Teilnehmer auch Timemaster wenigstens eines der zu synchronisierenden Bussysteme ist.

Zur Initialisierung läuft auf jedem TTCAN-Bus die für diesen Bus laut ISO 11898-4 und Stand der Technik für den TTCAN spezifizierte Initialisierungsprozedur ab. Als Resultat erhält man zwei oder auch mehrere unabhängig voneinander laufende TTCAN Busse mit verschiedenen globalen Zeiten und verschiedenen aktuellen Zeitmastern. In einer optionalen Variante kann man durch das Systemdesign dafür sorgen, dass auf beiden bzw. auf mehreren Bussen der selbe Knoten bzw. Teilnehmer zum Zeitmaster wird.

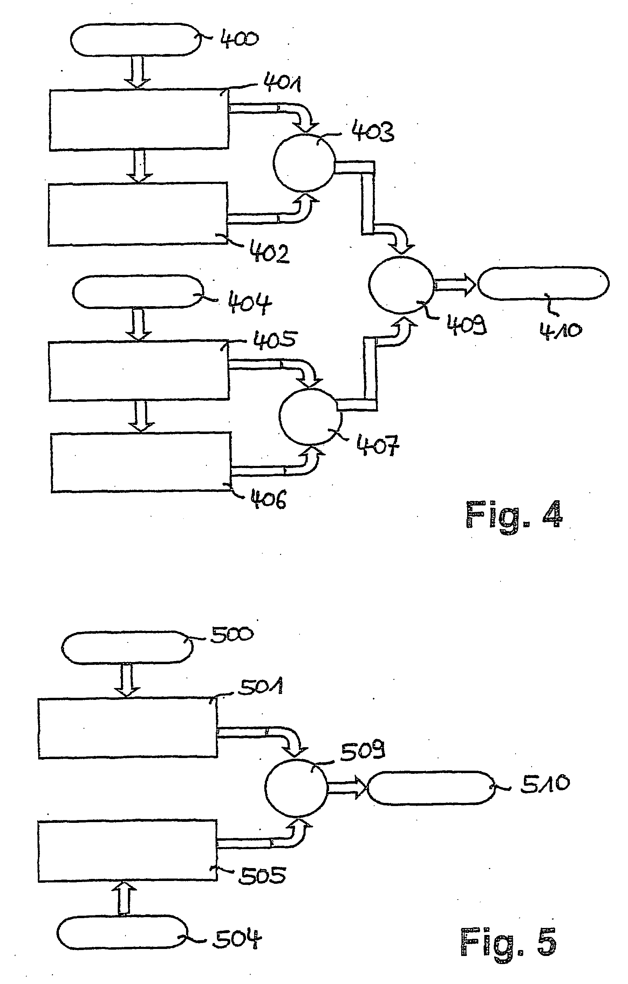

Im Weiteren wird anhand der Figuren 4 und 5 Frequenz- und Phasenangleich beschrieben, wobei die Frequenz und die Phase der Busse getrennt voneinander angleichbar sind, wobei in einer vorteilhaften Ausgestaltung zuerst die Frequenz angeglichen wird, weil, solange die Frequenz falsch ist bzw. abweicht, wird die Phase laufend geändert.

A) Frequenzabgleich zwischen zwei Bussen

Im TTCAN wird die Geschwindigkeit der globalen Zeit, d. h. die Länge der Zeiteinheit NTU durch die Zeitgeberfrequenz des Zeitmasters, also insbesondere die Oszillatorfrequenz oder Quarzfrequenz und dessen TUR-(time unit ratio) Wert bestimmt. Dabei sind die NTUs (network time unit), die Zeiteinheiten der globalen Zeit des jeweiligen Busses und TUR das Verhältnis zwischen der Länge einer NTU und der Länge einer spezifischen Basiszeiteinheit, z. B. der lokalen Zeitgeberperiode, also insbesondere der lokalen Oszillatorperiode, wie dies in dem ISO-Draft 11898-4 beschrieben ist. Die Synchronisationsschicht, das SL, muss dafür sorgen, dass die NTUs auf den verschiedenen Bussen die vorgesehenen Verhältnisse zueinander haben. Das SL kann dabei in Hardware oder Software durch die Verarbeitungseinheiten 109 und/oder 114 usw. repräsentiert sein, wobei das SL wie bereits erwähnt nicht notwendigerweise allen Teilnehmern immanent sein muss.

Grundsätzlich sind verschiedene Vorgehensweisen denkbar. Es kann ein Bus auf den anderen abgestimmt werden, indem die Frequenz des einen bzw. die Geschwindigkeit der globalen Zeit des einen als Vorgabe gewählt wird und die Differenz der Geschwindigkeit bzw. Frequenz des anderen dazu bestimmt wird, wobei dann der wenigstens eine weitere Bus auf den anderen abgestimmt wird oder die wenigstens zwei Busse nähern sich gegenseitig bezüglich der Geschwindigkeit der globalen Zeit, also insbesondere der Frequenz der Zeitgeber der jeweiligen Zeitmaster gegenseitig aneinander an. Weiterhin kann die Anpassung in einem Schritt erfolgen oder allmählich. Die jeweilige Strategie hängt vom SL, also der Synchronisationsschicht und den Anforderungen der jeweiligen Applikation ab. Allen Methoden ist das folgende Schema gemein:

• Das SL bestimmt für einen Bus die durchzuführende Korrektur und teilt sie dem aktuellen Zeitmaster mit. Die Korrektur kann z. B. das Verhältnis von gerade aktuellem TUR-Wert und dem neu einzustellenden TUR-Wert sein. Besonders vorteilhaft ist es, wenn das SL die Korrektur auf dem Zeitmaster bestimmt, wodurch der Korrekturwert, z. B. direkt der neue TUR-Wert sein kann.

- Das SL bestimmt im Zeitmaster den neuen TUR-Wert und benutzt diesen ab der folgenden Runde.

- Alle anderen Knoten dieses Busses folgen dem Zeitmaster über die TTCAN-Synchronisation.

In Figur 4 wird dazu im Block 400 die global time des ersten Busses, beispielsweise B1, z. b. 103B1, ermittelt. Diese wird zu einem Zeitpunkt T1 im Block 401 erfasst, d. h. gecaptured, wodurch in Block 401 ein erster Capturewert der globalen Zeit des Busses B1 entsteht. Ebenfalls zum Zeitpunkt T1 wird ein in Block 404 ermittelter Wert der globalen Zeit des Busses B2, beispielsweise 103B2, in Block 405 erfasst, also gecaptured. Zum nächsten Zeitpunkt T2 wird der jeweils erste Capturewert aus Block 401 bzw. Block 405 weitergeschoben in Block 402 bzw. Block 406, und ein neuer zweiter Capturewert bezüglich der globalen Zeit des jeweiligen Busses in Block 401 bzw. 405 erfasst. Aus diesen beiden Capturewerten in Block 401 und Block 402 bzw. Block 405 und Block 406 wird nun durch Differenzbildung im Block 403 bzw. Block 407 die jeweilige Geschwindigkeit der globalen Zeit oder auch die clock speed des jeweiligen Busses B1 bzw. B2 ermittelt. Aus diesen Werten für die Geschwindigkeit der globalen Zeit des jeweiligen Busses ergibt sich dann durch Differenzbildung im Block 409 ein Korrekturwert, der den Unterschied der Geschwindigkeit der globalen Zeiten der betrachteten Busse repräsentiert, also die Differenz der jeweiligen clock speed, also der Zeitgebergeschwindigkeit. Wie oben erwähnt kann diese auch z.B. über den jeweiligen TUR-Wert erfolgen bzw. ausgeführt werden. Das weitere erfindungsgemäße Verfahren läuft dann mit Hilfe des in Block 409 ermittelten Wertes bezüglich des Frequenzangleichs in Block 401 ab.

An einem Beispiel soll der Frequenzangleich nochmals verdeutlicht werden. Es gibt zwei Busse B1 und B2. Die Synchronisierungsstrategie ist, dass B2 die Länge der NTU an die auf B1 gültige Länge anpassen muss. Im einfachsten Fall seien beide nominal gleich lange. Die Applikation (SL) des aktuellen Zeitmasters von B2 habe direkten Zugriff auf den Bus B1 und es soll der selbe Zeitgeber bzw. die selbe Takt- bzw. Zeitquelle, also der selbe Oszillator oder Quarz für B1 und B2 verwendet werden. Dann sind die NTUs der beiden Busse B1 und B2 genau dann gleich lang, wenn der TUR-Wert dieses Knotens oder Teilnehmers bezüglich Bus B1 gleich dem TUR-Wert dieses Knotens bzw. Teilnehmers bezüglich Bus B2 ist. Das SL muss also den TUR-Wert bezüglich B1 als TUR-Wert bezüglich B2 verwenden.

Im Prinzip gleich kann die Situation behandelt werden, wenn die NTUs beider Busse ein beliebiges Verhältnis zueinander haben. In Hardware ist das dann vorteilhafter Weise leicht zu realisieren, wenn das Verhältnis bzw. dessen Kehrwert ganzzahlig ist, in einer besonders vorteilhaften Ausführungsform eine Zweierpotenz.

Wird nicht der selbe Zeitgeber bzw. die selbe Zeitquelle für beide Busse verwendet, so ist eine Möglichkeit, die Differenz der globalen Zeiten der beiden Busse zwei Mal oder öfter bzw. periodisch hintereinander zu messen und aus dem Vergleich zwischen der beobachteten Änderung der Differenz und der nominalen Änderung der Differenz einen Korrekturfaktor zu berechnen. Diese Möglichkeit ist auch gegeben, wenn der aktuelle Zeitmaster nicht selbst auf beide Busse Zugriff hat. Alternativ kann das SL die Länge eines Basiszyklus auf einem Bus in Einheiten des anderen Busses messen und daraus den Korrekturwert bestimmen.

B) Phasenangleich

Zum Phasenangleich misst das SL den Phasenunterschied zwischen zwei globalen Zeiten auf zwei Bussen und bestimmt für jeden der beiden Busse den einzustellenden Sprung bzw. Korrekturwert. Dies kann vorteilhafter Weise unter Zuhilfenahme des Stopwatch-Registers des TTCAN erfolgen.

Das SL teilt den beiden aktuellen Zeitmastern der beiden Busse den jeweilig einzustellenden Sprung bzw. Korrekturwert mit. Ein Zeitmaster, der einen Sprung einzustellen hat, setzt ein vorgegebenes Bit, speziell beim TTCAN das Discontinuity-Bit in der nächsten Referenznachricht und verschiebt seine globale Zeit um den entsprechenden Betrag. Dadurch wird dann die Zeitreferenznachricht bzw. Referenznachricht des entsprechenden Zeitmasters zum angepassten Zeitpunkt gesendet. Nach dem erfolgreichen Senden dieser Referenznachricht bzw. Referenznachrichten auf gegebenenfalls wenigstens den beiden Bussen sind die wenigstens beiden Busse aufeinander synchronisiert.

Dieser Phasenangleich ist in Figur 5 dargestellt. Dabei werden die globalen Zeiten zweier Busse im Block 500 bzw. 504 ermittelt und im Block 501 bzw. Block 505 erfasst, also gecaptured. Die Capturerung erfolgt dabei jeweils zum gleichen Zeitpunkt Tl. Nun werden die beiden Capturewerte direkt einer Differenzbildung in Block 509 zugeführt, wobei dann durch die einfachen Capturewerte beider Busse der Phasenunterschied, also die Differenz der clock phase, der Taktquellenphase oder Zeitquellenpzhase, ermittelt werden kann. Das weitere erfindungsgenmäß beschriebene Verfahren läuft dann im Block 510 ab.

Insbesondere bei mehr als zwei Bussen ist es vorteilhaft, wenn bei einer solchen paarweisen Synchronisierung zweier Busse der Sprung bzw. die Korrektur nur auf einem der beiden Busse stattfindet, d. h. einer der beiden Busse eine Masterrolle für die globale Zeit einnimmt. D. h. die globale Zeit auf dem ersten Bus bleibt unverändert, die globale Zeit auf dem zweiten Bus springt bzw. wird verändert. In diesem Fall kann man mehr als zwei Busse problemlos sukzessive über die paarweise Synchronisierung aufeinander synchronisieren, ohne dass die Synchronisierung eines Paars auf die eines anderen einen insbesondere komplizierten Einfluss hat.

An einem Beispiel soll dies verdeutlicht werden. Es gibt fünf Busse B1, B2, B3, B4, B5 im System. Die synchronisierbaren bzw. gekoppelten Paare seien (B1, B2), (B1, B3), (B2, B4), (B3, B5). Wenn B1 der Master für B2 und B3 ist, B2 der für B4 und B3 der für B5, dann führt die paarweise Synchronisierung (B2 und B3 synchronisieren sich erst auf B1, dann B4 auf B2 und B5 auf B3) innerhalb von zwei Runden zur systemweiten Synchronisierung.

Im gleichen System könnte man die Synchronisierung auch ohne Masterprinzip durchführen. Dann muss allerdings das SL sicherstellen, dass einmal synchronisierte Busse auch synchronisiert bleiben, d. h. ein Sprung bzw. eine Veränderung auf einem Bus auch auf allen Bussen, die zu diesem synchronisiert sind, stattfindet.

Darüber hinaus ist es vorteilhaft (aber nicht notwendig), wenn der Zeitmaster eines zu synchronisierenden Busses auch direkten Zugang zur globalen Zeit des entsprechenden Partnerbusses hat. In diesem Fall kann das SL nur auf den potentiellen Zeitmastern eines Busses eingerichtet werden, d. h. die Mitteilung des SL über die Höhe des einzustellenden Sprungs entfällt bzw. wird sehr einfach.

Es ist nicht notwendig, dass die NTUs, also die Zeiteinheiten der globalen Zeit auf den zu synchronisierenden Bussen gleich sind. Besonders einfach und nützlich ist es aber, wenn die (nominalen) NTUs zwischen zwei gekoppelten Bussen sich nur um einen ganzzahligen Faktor (insbesondere vorteilhafter Weise Zweierpotenzen) unterscheiden.

C) Phasenangleich durch Frequenzverschiebung

Alternativ zu dem eben dargestellten Mechanismus bezüglich des Phasenangleichs in Punkt B) besteht auch die Möglichkeit durch längerfristige Veränderung der Geschwindigkeit (vgl. hierzu Punkt A) einen Phasenangleich zu erzielen. Das prinzipielle Vorgehen ist genau das gleiche, wie dies beim Frequenzangleich zwischen zwei Bussen in Punkt A) beschrieben ist. Ziel ist es in diesem Fall aber nicht, die NTU des anzupassenden Busses genau dem dortigen Zielwert anzupassen, sondern diese NTU etwas zu verlängern oder zu verkürzen, so dass die anzupassende Uhr bzw. der Zeitgeber etwas langsamer oder schneller inkrementiert wird und somit über längere Zeit hinweg ein Phasenangleich erzielt wird.

D) Beibehaltung des synchronisierten Zustands

Nach einem Phasenangleich wie in B) oder C) gibt es verschiedene Möglichkeiten, den synchronisierten Zustand zu erhalten. Einerseits durch Wiederholung des Phasenangleichs, sobald die beobachtete Phase einen bestimmten Wert übersteigt, andererseits durch Anpassung der Frequenz, wie in Punkt A) beschrieben. Des Weiteren ergibt sich eine Kombination der beiden Möglichkeiten. Da bei der Methode in Punkt A) die Frequenzanpassung typischerweise eine Runde später geschieht als eine entsprechende Frequenzänderung beim Masterbus, kann es selbst bei einer sehr genauen Übereinstimmung der Frequenzen der beteiligten Busse zu einem Aufsammeln einer Differenz führen. In diesem Fall muss ab und zu ein kleiner Phasenangleich oder eine Kompensation durch eine gezielt, insbesondere vorgegebene, nicht genau übereinstimmende Frequenz erfolgen.

Die Verwendung der entsprechenden TTCAN-Schnittstelle kann mit einem Debug-Instrument aufgezeigt werden. Über ein Busmonitoring kann auch das Verhalten auf dem Bus analysiert werden.

Im Weiteren wird nun ein allgemeines Verfahren zur Synchronisation beschrieben, und zwar dahingehend, wie zwei oder mehrere TTCAN-Busse ihre Zykluszeiten (cycle times) aufeinander synchronisieren können. Auch hier kann dieses Verfahren sowohl von einer dedizierten Hardware, von der auf den entsprechenden Hosts ablaufenden Applikation oder von einer speziellen Softwareschicht durchgeführt werden. Im Folgenden wird das Verfahren einschließlich möglicher Varianten im Ablauf beschrieben, wobei die gleichen Voraussetzungen und Definitionen gelten, wie dies bei der Synchronisation der globalen Zeit der Fall war, also direkte Synchronisierbarkeit, wenn es mindestens einen Gateway-Rechner gibt, der auf beide Busse Zugriff hat, und dass es zwischen zwei zu synchronisierenden Bussen eine Kette von Gateways gibt, die die beiden Busse über direkt synchronisierbare, gekoppelte Paare, verbindet. Auch hier erfolgt die Synchronisation mittels Synchronisationsschicht in Hardware oder Software, welche die Synchronisation durchführt und im folgenden Synchronisationslayer SLZ bezüglich der Zykluszeiten genannt wird. Auch hier muss das SLZ nicht notwendigerweise auf jedem Knoten vorhanden sein. Zunächst soll hier wiederum im Punkt AZ) der Frequenzangleich zwischen zwei Bussen behandelt werden.

AZ) Frequenzangleich zwischen zwei Bussen

Ein Frequenzangleich ist nur im TTCAN-Level 2 über Protokollmechanismen möglich. Allerdings reicht es aus, wenn der Zeitmaster im Level-2-Betrieb gefahren wird. Für andere Knoten ist dies nicht notwendig. Dort verläuft der Angleich wie der entsprechende Angleich für die globale Zeit, wie vorher beschrieben und kann also nicht unabhängig von diesem gemacht werden, falls im gleichen Netzwerk auch die globale Zeit synchronisiert wird.

Im TTCAN-Level 2 wird die Geschwindigkeit der Zykluszeit, d.h. die Länge der Zeiteinheit NTUZ durch die Frequenz des Zeitgebers, insbesondere des Oszillators des Zeitmasters und dessen TUR-Wert bestimmt, wie oben bereits für die globale Zeit beschrieben. Das SLZ muss dafür sorgen, dass die NTUZs auf den verschiedenen Bussen die vorgesehenen Verhältnisse zueinander haben. Die NTUZ kann dabei gleich oder unterschiedlich zur vorher genannten NTU sein.

Grundsätzlich sind verschiedene Vorgehensweisen denkbar. Es kann wieder ein Bus auf den anderen abgestimmt werden oder beide bzw. mehrere nähern sich gegenseitig an. Weiter kann die Anpassung wiederum in einem Schritt erfolgen oder allmählich. Die jeweilige Strategie hängt vom SLZ und den Anforderungen der Applikation ab. Insbesondere kann die Synchronisation der globalen Zeit und die Synchronisation der Zykluszeit beispielsweise vom gleichen Softwarelayer, also der gleichen Synchronisationsschicht SL durchgeführt werden, was in einer vorteilhaften Ausgestaltung bedeutet:

$$SL = SLZ.$$

Allen Methoden bezüglich des Frequenzangleichs im Rahmen der Zykluszeit ist das folgende Schema gemein:

- Das SLZ bestimmt für einen Bus die durchzuführende Korrektur und teilt sie dem aktuellen Zeitmaster mit. Die Korrektur kann z. B. das Verhältnis von gerade aktuellem TUR-Wert und dem neu einzustellenden TUR-Wert sein. Besonders vorteilhaft ist es wieder, wenn das SLZ die Korrektur auf dem Zeitmaster bestimmt. Dann kann der Korrekturwert z. B. der neue TUR-Wert sein.

- Das SLZ bestimmt im Zeitmaster den neuen TUR-Wert und benutzt diesen ab der folgenden Runde.

- Alle anderen Knoten dieses Busses folgen dem Zeitmaster über die TTCAN-Synchronisation.

Das Verfahren kann wieder anhand Figur 4 erläutert werden, wobei der Ablauf im wesentlichen gleich ist, nur nicht mit der global time, sondern mit der cycle time, also nicht mit der globalen Zeit, sondern der Zykluszeit. Deshalb wird hier auf die vorhergehenden Ausführungen zu Figur 4 verwiesen und nicht explizit erneut beschrieben.

Wiederum ein Beispiel:

Es gibt zwei Busse B1, B2. Die Synchronisierungsstrategie ist, dass B2 die Länge der NTUZ an die auf B1 gültige Länge anpassen muss. Im einfachsten Fall seien beide nominal gleich lang. Die Applikation (SLZ) des aktuellen Zeitmasters von B2 habe direkten Zugriff auf den Bus B1, und es soll der selbe Oszillator für B1 und B2 verwendet werden. Dann sind die NTUZs der beiden Busse B1 und B2 genau dann gleich lang, wenn der TUR-Wert dieses Knotens bezüglich B1 gleich dem TUR-Wert dieses Knotens bezüglich B2 ist. Das SLZ muss also den TUR-Wert bezüglich B1 als TUR-Wert bezüglich B2 verwenden.

Im Prinzip gleich kann die Situation behandelt werden, wenn die NTUZs beider Busse ein beliebiges Verhältnis zueinander haben. In Hardware ist es dann wieder vorteilhaft, wenn das Verhältnis bzw. der Kehrwert ganzzahlig, insbesondere eine Zweierpotenz ist. Wird nicht der selbe Zeitgeber, insbesondere Oszillator, für beide Busse verwendet, gibt es wieder die vorgenannte Möglichkeit die Differenz der globalen Zeiten der beiden Busse wenigstens zwei Mal bzw. periodisch hintereinander zu messen und aus dem Vergleich zwischen der beobachteten Änderung der Differenz und der nominalen Änderung der Differenz einen Korrekturfaktor zu berechnen. Diese Möglichkeit ist ebenfalls wieder gegeben, wenn der aktuelle Zeitmaster nicht Zugriff auf beide Busse hat. Alternativ kann das SLZ die Länge eines Basiszyklus aus einem Bus in Einheiten des anderen Busses messen und daraus den Korrekturwert bestimmen.

BZ) Phasenangleich

- Das SLZ misst wiederum den Phasenunterschied zwischen zwei Zeiten auf zwei Bussen und bestimmt für jeden der zwei Busse den einzustellenden Sprung bzw. die Änderung. Das SLZ teilt den beiden aktuellen Zeitmastern der beiden Busse den jeweilig einzustellenden Sprung mit.

- Ein Zeitmaster, der einen Sprung einzustellen hat, setzt wiederum ein vorgegebenes Bit, hier insbesondere das Next_is_Gap-Bit des TTCAN (siehe ISO Draft) in der Referenznachricht. Er erhält vom lokalen SLZ den Startzeitpunkt des nächsten Basiszyklus (basic cycle).

- Nach dem erfolgreichen Senden dieser Referenznachricht bzw. Nachrichten auf gegebenenfalls beiden Bussen sind. die Zykluszeitphasen der beiden Busse aufeinander synchronisiert.

Dies ist wieder wie oben bereits beschrieben mit Figur 5 darstellbar, wobei statt der globalen Zeit die Zykluszeit eingesetzt wird sowie das Next_is_Gap-Bit verwendet wird. Diese gewünschte Phase kann hier 0 sein, d. h. auf beiden Bussen beginnt der Basiszyklus zur gleichen Zeit. Dies ist aber keinesfalls notwendig. Es ist nicht notwendig, dass die NTUZs, also die Zeiteinheiten der Zykluszeit, auf den zu synchronisierenden Bussen gleich sind.
Besonders einfach und nützlich ist es aber, wenn die (nominalen) NTUZs zwischen zwei gekoppelten Bussen sich nur um einen ganzzahligen Faktor, insbesondere vorteilhafter Weise Zweiterpotenzen, unterscheiden.

Es ist weiterhin nicht notwendig, dass die Zykluslängen der zu synchronisierenden Busse gleich sind. Besonders nützlich wird das vorgeschlagene Verfahren allerdings, wenn die (nominalen) Zykluslängen zweier Busse in einem rationalen Verhältnis zueinander stehen, das nicht zu große natürliche Zahlen verwendet, da dann regelmäßig in leicht nachvollziehbarer Form von einer festen Phase gesprochen werden kann. Beispiel: Auf einem Bus B1 laufen zwei (nominale) Zyklen ab, während auf einem anderen Bus B2 drei ablaufen. Dann besteht alle zwei Zyklen auf B1 (drei Zyklen auf B2) eine theoretisch feste Phasenlage zwischen B1 und B2.

Insbesondere bei mehr als zwei Bussen ist es hierbei vorteilhaft, wenn bei einer solchen paarweisen Synchronisierung zweier Busse der Sprung nur auf einem der beiden Busse stattfindet, d. h. einer der beiden Busse eine Masterrolle für die Phase der Zykluszeit einnimmt. D. h. die Aneinanderreihung der Basiszyklen auf dem ersten Bus bleibt unverändert, während auf dem zweiten Bus ein Gap, also eine Lücke zwischen zwei Basiszyklen eingefügt wird, das gerade so groß ist, dass die gewünschte Phase eingestellt wird. In diesem Fall kann man mehr als zwei Busse problemlos sukzessive über die paarweise Synchronisierung aufeinander synchronisieren, ohne dass die Synchronisierung eines Paars auf die eines anderen einen, insbesondere komplizierten, Einfluss hat.

Beispiel:

Es gibt fünf Busse, B1 bis B5 im System. Synchronisierbare Paare seien (B1, B2), (B1, B3), (B2, B4), (B3, B5). Wenn B1 der Master für B2 und B3 ist, B2 der für B4 und B3 der für B5, dann führt die paarweise Synchronisierung (B2 und B3 synchronisieren sich erst auf B1, dann B4 auf B2 und B5 auf B3) innerhalb von zwei Runden zur systemweiten Synchronisierung.

Im gleichen System könnte man die Synchronisierung auch ohne Masterprinzip durchführen. Dann muss allerdings das SLZ sicherstellen, dass einmal synchronisierte Busse auch synchronisiert bleiben, d. h. ein Sprung bzw. eine Korrektur auf einem Bus auch auf allen Bussen, die zu diesem synchronisiert sind, stattfindet.

Darüber hinaus ist es vorteilhaft (aber nicht notwendig), wenn der Zeitmaster eines zu synchronisierenden Busses auch direkt Zugang zum entsprechenden Partnerbus hat. In diesem Fall kann das SLZ nur auf den potentiellen Zeitmastern eines Busses eingerichtet werden, d. h. die Mitteilung des SLZ über die Höhe des einzustellenden Sprungs bzw. der einzustellenden Korrektur entfällt bzw. wird sehr einfach.

CZ) Phasenangleich durch Frequenzverschiebung

Wiederum alternativ zum Mechanismus diesmal in Punkt BZ), besteht auch hier die Möglichkeit durch längerfristige Veränderung der Geschwindigkeit wie in Punkt AZ) einen Phasenangleich zu erzielen. Das prinzipielle Vorgehen ist genau das gleiche wie in Punkt AZ) beschrieben. Ziel ist es in diesem Fall aber nicht, die NTUZs des anzupassenden Busses genau dem dortigen Zielwert anzupassen, sondern diese NTUZs etwas zu verlängern oder zu verkürzen, so dass die anzupassende Uhr etwas langsamer oder schneller inkrementiert wird und somit über längere Zeit hinweg ein Phasenangleich erzielt wird.

DZ) Beibehaltung des synchronisierten Zustands

Nach einem Phasenangleich wie in BZ) oder CZ) gibt es verschiedene Möglichkeiten, den synchronisierten Zustand zu erhalten, wie dies bereits im Punkt D) der Synchronisierung der globalen Zeit beschrieben ist:

- Wiederholung des Phasenangleichs, sobald die beobachtete Phase einen bestimmten Wert übersteigt.

- Anpassung der Frequenz, wie in AZ) bzw. A) oder eine Kombination der beiden Möglichkeiten.

Da bei der Methode in AZ) oder A) die Frequenzanpassung typischerweise eine Runde später geschieht als eine entsprechende Frequenzänderung beim Masterbus, kann es selbst bei einer sehr genauen Übereinstimmung der Frequenzen der beteiligten Busse zu einem Aufsammeln einer Differenz führen. In diesem Fall muss ab und zu ein kleiner Phasenangleich oder eine Kompensation durch eine bewusst nicht genau übereinstimmende Frequenz erfolgen. Die Verwendung kann wie bei der Synchronisierung der globalen Zeit über ein Debug-Instrument angezeigt werden oder es wird das Verhalten auf dem Bus mit Busmonitoring analysiert.

**Patentansprüche**

1. Verfahren zur Synchronisierung wenigstens zweier TTCAN-Busse (103B1, 103B2) mit wenigstens einem Busteilnehmer (101, 102, 105), wobei in den TTCAN-Bussen Zykluszeiten der Basiszyklen vorliegen, wobei in jedem TTCAN-Bus eine globale Zeit ermittelt wird und aus den globalen Zeiten die Abweichungen der globalen Zeiten der TTCAN-Busse ermittelt werden, welche über wenigstens einen Teilnehmer (100) miteinander verbunden sind und die Abweichungen der einzelnen globalen Zeiten wenigstens einem Busteilnehmer übermittelt werden, wobei abhängig von den Abweichungen der globalen Zeiten eine Anpassung der Zykluszeiten der über wenigstens einen Teilnehmer verbundenen TTCAN-Busse aneinander vorgenommen wird, so dass diese bezüglich der Zykluszeiten synchronisiert sind.

2. Verfahren nach Anspruch 1, **dadurch gekennzeichnet, dass** eine Anpassung der Zykluszeiten der über wenigstens einen Teilnehmer verbundenen TTCAN-Busse durch Anpassung der Phase der globalen Zeit erfolgt.

3. Verfahren nach Anspruch 1, **dadurch gekennzeichnet, dass** eine Anpassung der Zykluszeiten der über wenigstens einen Teilnehmer verbundenen TTCAN-Busse durch Anpassung der Frequenz der globalen Zeit erfolgt.

4. Verfahren nach Anspruch 2, **dadurch gekennzeichnet, dass** die Anpassung der Phase der globalen Zeit abhängig von dem Wert wenigstens eines vorgegebenen Bits ausgeführt wird.

5. Verfahren nach Anspruch 4, **dadurch gekennzeichnet, dass** das wenigstens eine vorgegebene Bit dem Next_is_Gap-Bit des TTCAN entspricht.

6. Verfahren nach Anspruch 3, **dadurch gekennzeichnet, dass** zur Anpassung der Frequenz der globalen Zeit jeweils eine kleinste Zeiteinheit (NTUZ) in den wenigstens zwei zu synchronisierenden TTCAN-Bussen ermittelt wird und diese kleinsten Zeiteinheiten mit einander ins Verhältnis gesetzt werden und das dabei entstehende reale Verhältnis mit einem vorgegebenen Verhältnis verglichen wird, wobei wenigstens eine kleinste Zeiteinheit so angepasst wird, dass das vorgegebene Verhältnis erzielt wird.

7. Verfahren nach Anspruch 6, **dadurch gekennzeichnet**, das das vorgegebene Verhältnis ganzzahlig insbesondere einem Vielfachen oder Teiler der Zahl Zwei entspricht.

8. Vorrichtung zur Synchronisierung wenigstens zweier TTCAN-Busse(103B1, 103B2) mit wenigstens einem Busteilnehmen(101, 102, 105), wobei in den TTCAN-Bussen Zykluszeiten der Basiszyklen vorliegen, wobei erste Mittel enthalten sind, die in jedem TTCAN-Bus eine globale Zeit ermitteln und aus den globalen Zeiten die Abweichungen der globalen Zeiten der TTCAN-Busse ermitteln, welche über wenigstens einen Teilnehmer (100) miteinander verbunden sind und die Abweichungen der einzelnen globalen Zeiten wenigstens einem Busteilnehmer übermitteln, wobei zweite Mittel enthalten sind, die abhängig von den Abweichungen der globalen Zeiten eine Anpassung der Zykluszeiten der über wenigstens einen Teilnehmer verbundenen TTCAN-Busse aneinander vornehmen, so dass diese bezüglich der Zykluszeiten synchronisiert sind.

9. Vorrichtung nach Anspruch 8, **dadurch gekennzeichnet, dass** die ersten und zweiten Mittel in einer Synchronisationsschicht enthalten sind, welche in wenigstens einem Teilnehmer enthalten ist.

10. Bussystem bestehend aus wenigstens zwei Datenbusse (103B1, 103B2), wobei der, erste Datenbus (103B1) eine erste Anzahl von Teilnehmern (101, 102) aufweist und der zweite Datenbus (103B2) eine zweite Anzahl von Teilnehmern (105) aufweist, **dadurch gekennzeichnet, dass** als Datenbusse wenigstens zwei TTCAN-Busse verwendet werden wobei wenigstens ein Teilnehmer (100) als Verbindungsteilnehmer derart enthalten ist, dass zwei der wenigstens zwei TTCAN-Busse mit dem wenigstens einen Verbindungsteilnehmer gleichzeitig in Verbindung stehen und ein Teilnehmer enthalten ist, der für jeden TTCAN-Bus eine Zeitmasterfunktion ausübt, wonei durch den Teilnehmer mit Zeitmasterfunktion ein Basiszyklus mit einer Zykluszeit vorgegeben wird, wobei bei einem Bussystem mit mehr als zwei TTCAN-Bussen diese derart verbunden sind, dass jeweils wenigstens zwei TTCAN-Busse wenigstens einen gemeinsamen Verbindungsteilnehmer aufweisen und in dem Bussystem Synchronisationsmittel enthalten sind, welche in jedem TTCAN-Bus eine globale Zeit ermitteln und die Abweichungen der einzelnen globalen Zeiten den Teilnehmern mit Zeitmasterfunktion übermitteln, wobei die Teilnehmer mit Zeitmasterfunktion eine Anpassung der jeweiligen Zykluszeit vornehmen.

## Claims

1. Method for synchronization of at least two TTCAN buses (103B1, 103B2) to at least one bus subscriber (101, 102, 105), with cycle times of the basic cycles being present in the TTCAN buses, with a global time being determined in each TTCAN bus, and with the global times being used to determine the discrepancies between the global times of the TTCAN buses which are connected to one another via at least one subscriber (100), and the discrepancies between the individual global times being transmitted to at least one bus subscriber, and with the cycle times of the TTCAN buses which are connected via at least one subscriber being matched to one another as a function of the discrepancies between the global times such that their cycle times are synchronized.

**2.** Method according to Claim 1, **characterized in that** the cycle times of the TTCAN buses which are connected via at least one subscriber are matched by matching the phase of the global time.

**3.** Method according to Claim 1, **characterized in that** the cycle times of the TTCAN buses which are connected via at least one subscriber are matched by matching the frequency of the global time.

**4.** Method according to Claim 2, **characterized in that** the phase of the global time is matched as a function of the value of at least one predetermined bit.

**5.** Method according to Claim 4, **characterized in that** the at least one predetermined bit corresponds to the Next_is_Gap bit for the TTCAN.

**6.** Method according to Claim 3, **characterized in that** a shortest time unit (NTUZ) in the at least two TTCAN buses to be synchronized is in each case determined for matching the frequency of the global time, and these shortest time units are formed into a ratio with respect to one another, and the real ratio which results in this case is compared with a predetermined ratio, with at least one shortest time unit being adapted such that the predetermined ratio is achieved.

**7.** Method according to Claim 6, **characterized in that** the predetermined ratio is an integer and corresponds in particular to a multiple or divisor of the number two.

**8.** Apparatus for synchronization of at least two TTCAN buses (103B1, 103B2) to at least one bus subscriber (101, 102, 105), with cycle times of the basic cycles being present in the TTCAN buses, with first means being included which determine a global time in each TTCAN bus and use the global times to determine the discrepancies between the global times of the TTCAN buses which are associated with one another via at least one subscriber (100), and with the discrepancies between the individual global times being transmitted to at least one bus subscriber, and with second means being included, which match the cycle times of the TTCAN buses which are connected via at least one subscriber to one another as a function of the discrepancies between the global times, such that their cycle times are synchronized.

**9.** Apparatus according to Claim 8, **characterized in that** the first and second means are included in a synchronization layer which is included in at least one subscriber.

**10.** Bus system comprising at least two data buses (103B1, 103B2), with the first data bus (103B1) having a first number of subscribers (101, 102), and with the second bus (103B2) having a second number of subscribers (105), **characterized in that** at least two TTCAN buses are used as the data buses, with at least one subscriber (100) being included as connection subscriber such that two of the at least two TTCAN buses are connected at the same time to the at least one connection subscriber, and a subscriber is included which carries out a time master function for each TTCAN bus, with the subscriber having the time master function predetermining a basic cycle with a cycle time, and, in the case of a bus system with more than two TTCAN buses, these buses being connected such that in each case at least two TTCAN buses have at least one common connection subscriber, and the bus system includes synchronization means which determine a global time in each TTCAN bus and transmit the discrepancies between the individual global times to the subscribers having a time master function, and with the subscribers having a time master function matching the respective cycle time.

**Revendications**

**1.** Procédé de synchronisation d'au moins deux bus TTCAN (103B1, 103B2) avec au moins un participant (101, 102, 105) aux bus, selon lequel des temps des cycles de base existent dans les bus TTCAN, un temps global est calculé dans chaque bus TTCAN et, à partir des temps globaux ont calculé les écarts des temps globaux des bus TTCAN, reliés l'un avec l'autre par l'intermédiaire d'au moins un participant (100), et les écarts des temps globaux respectifs sont transmis au moins à un participant aux bus et, en fonction des écarts des temps globaux, une adaptation des temps de cycle des bus TTCAN reliés par l'intermédiaire d'au moins un participant est effectuée l'un par rapport à l'autre, si bien que ceux-ci ont des temps de cycle synchronisés.

**2.** Procédé selon la revendication 1,
**caractérisé en ce qu'**
une adaptation des temps de cycle des bus TTCAN reliés par l'intermédiaire d'au moins un participant est réalisée par adaptation de la phase du temps global.

**3.** Procédé selon la revendication 1,
**caractérisé en ce qu'**
une adaptation des temps de cycle des bus TTCAN reliés par l'intermédiaire d'au moins un participant est réalisée par adaptation de la fréquence du temps global.

**4.** Procédé selon la revendication 2, **caractérisé en ce que** l'adaptation de la phase du temps global est réalisée en fonction de la valeur d'au moins un bit prédéterminé.

**5.** Procédé selon la revendication 4, **caractérisé en ce que** le, au moins un, bit prédéterminé correspond au next_is_gap_bit du TTCAN.

**6.** Procédé selon la revendication 3, **caractérisé en ce que** pour l'adaptation de la fréquence du temps global, respectivement une très petite unité de temps (NTUZ) est calculée dans les, au moins deux, bus TTCAN à synchroniser et ces très petites unités de temps sont mises en rapport les unes avec les autres, et le rapport réel ainsi obtenu est comparé avec un rapport prédéterminé, au moins une très petite unité de temps étant adaptée de manière à obtenir le rapport prédéterminé.

**7.** Procédé selon la revendication 6, **caractérisé en ce que** le rapport prédéterminé correspond en nombre entier en particulier à un multiple ou des parties du nombre deux.

**8.** Dispositif de synchronisation d'au moins deux bus TTCAN (103B1, 103B2) avec au moins un participant (101, 102, 105) aux bus, avec des temps des cycles de base existant dans les bus TTCAN, dans lequel sont contenus des premiers moyens qui calculent un temps global dans chaque bus TTCAN et, qui à partir des temps globaux, calculent les écarts des temps globaux des bus TTCAN, reliés l'un avec l'autre par l'intermédiaire d'au moins un participant (100), les écarts des temps globaux respectifs étant transmis au moins à un participant aux bus, et des deuxièmes moyens qui en fonction des écarts des temps globaux, effectuent une adaptation des temps de cycle des bus TTCAN reliés par l'intermédiaire d'au moins un participant, l'un par rapport à l'autre, si bien que ceux-ci ont des temps de cycle synchronisés.

**9.** Dispositif selon la revendication 8, **caractérisé en ce que** les premiers et les deuxièmes moyens sont contenus dans une couche de synchronisation qui est contenue dans au moins un participant.

**10.** Système de bus constitué d'au moins deux bus de données (103B1, 103B2), dans lequel le premier bus de données (103B1) présente un premier nombre de participants (101, 102) et le deuxième bus de données (103B2) présente un deuxième nombre de participants (105), **caractérisé en ce qu'** au moins deux bus TTCAN sont utilisés comme bus de données, et au moins un participant (100) est contenu en tant que participant de liaison de façon que deux des, au moins deux, bus TTCAN sont simultanément en liaison avec l'au moins un participant de liaison, avec un participant qui exerce pour chaque bus TTCAN une fonction maître de temps, le participant à fonction maître de temps prédéterminant un cycle de base avec un temps de cycle, et, dans le cas d'un système de bus avec plus de deux bus TTCAN, ceux-ci sont reliés de manière qu'au moins deux bus TTCAN présentent respectivement au moins un participant de liaison commun, le système de bus contenant des moyens de synchronisation qui calculent dans chaque bus TTCAN un temps global et transmettent les écarts des temps globaux respectifs aux participants à fonction maître de temps, les participants à fonction maître de temps effectuant une adaptation du temps de cycle respectif.

Fig. 1

EP 1 370 955 B1

Fig. 2

Fig. 3

Fig. 4

Fig. 5